# EUROPÄISCHE PATENTSCHRIFT

(11) **EP 0 929 425 B1**
(45) Veröffentlichungstag und Bekanntmachung des Hinweises auf die Patenterteilung: **26.11.2003**
(21) Anmeldenummer: 97943902.3
(22) Anmeldetag: 25.09.1997
(51) Int. Cl.: B60T 7/04, B60T 13/12

(54) **EINRICHTUNG ZUR BETÄTIGUNG EINER KRAFTFAHRZEUG-BREMSANLAGE**
ARRANGEMENT FOR ACTUATING A MOTOR VEHICLE BRAKING SYSTEM
DISPOSITIF D'ACTIONNEMENT D'UN SYSTEME DE FREINAGE POUR VEHICULE

(30) Priorität: 02.10.1996 DE 19640767
(43) Veröffentlichungstag der Anmeldung: 21.07.1999
(73) Patentinhaber: Continental Teves AG & Co. oHG, 60488 Frankfurt (DE)
(72) Erfinder: FEIGEL, Hans-Jörg, D-61191 Rosbach (DE); NEUMANN, Ulrich, D-64380 Ro dorf (DE)
(74) Vertreter: Dusil, Vladimir, Dipl.-Ing.
(86) Internationale Anmeldenummer: EP9705264
(87) Internationale Veröffentlichungsnummer: WO98014355

(56) Entgegenhaltungen:
- EP-A- 0 708 006
- DE-A- 4 343 314
- DE-A- 19 546 647
- GB-A- 2 178 497
- US-A- 4 591 031

## Beschreibung

Die vorliegende Erfindung betrifft eine Einrichtung zur Betätigung einer Kraftfahrzeug-Bremsanlage vom Typ "Brake-by-wire" bestehend aus einem Betätigungspedal sowie einem mit dem Bremspedal zusammenwirkenden Wegsimulator, dessen Simulatorkolben mit dem Betätigungspedal in kraftübertragender Verbindung steht und mittels einer Feder vorgespannt ist, und der Mittel zur Dämpfung der Bewegung des Simulatorkolbens in Abhängigkeit vom Betätigungspedalweg aufweist.

Eine derartige Einrichtung ist z. B. aus der EP 0 708 06 A1 bekannt. Der Dämpfungsgrad der vorbekannten Einrichtung, die im wesentlichen aus einem Betätigungspedal, einem durch einen federnd vorgespannten Simulatorkolben gebildeten Wegsimulator sowie einem Dämpfer besteht, kann in Abhängigkeit von der Pedalbetätigungsgeschwindigkeit oder dem Pedalbetätigungsweg geändert werden. Der erwähnten Veröffentlichung sind jedoch keine Hinweise auf konkrete Ausführungen der betätigungspedalwegabhängigen Dämpfungsmittel zu entnehmen.

Es ist daher Aufgabe der vorliegenden Erfindung, Mittel vorzuschlagen, die eine wirksame Dämpfung der Bewegung des Wegsimulatorkolbens in Abhängigkeit vom Betätigungspedalweg ermöglichen.

Diese Aufgabe wird erfindungsgemäß dadurch gelöst, daß der Simulatorkolben einen hydraulischen Raum begrenzt, der über mindestens einen variablen Strömungswiderstand mit einem drucklosen Druckmittelvorratsbehälter verbunden ist. Durch diese Maßnahme wird dem Fahrzeugfahrer bei der Betätigung ein angenehmes, gewöhnliches Pedalgefühl vermittelt.

Vorteilhafte Weiterbildungen des Erfindungsgegenstandes sind in den Unteransprüchen 2 bis 14 aufgeführt.

Weitere Einzelheiten, Merkmale und Vorteile der Erfindung gehen aus der nachfolgenden Beschreibung von drei Ausführungsbeispielen unter Bezugnahme auf die beiliegende Zeichnung hervor. In der Zeichnung zeigt:
- Fig. 1: eine erste Ausführungsform der erfindungsgemäßen Einrichtung zur Betätigung einer Kraftfahrzeug-Bremsanlage vom Typ "Brake-by-wire",
- Fig. 2 und 3: eine zweite und eine dritte Ausführungsform der erfindungsgemäßen Einrichtung zur Betätigung einer Kraftfahrzeug-Bremsanlage vom Typ "Brake-by-wire", und
- Fig.4a, b,c,d: diagrammatische Darstellungen der Funktion der Einrichtung gemäß Fig. 3.

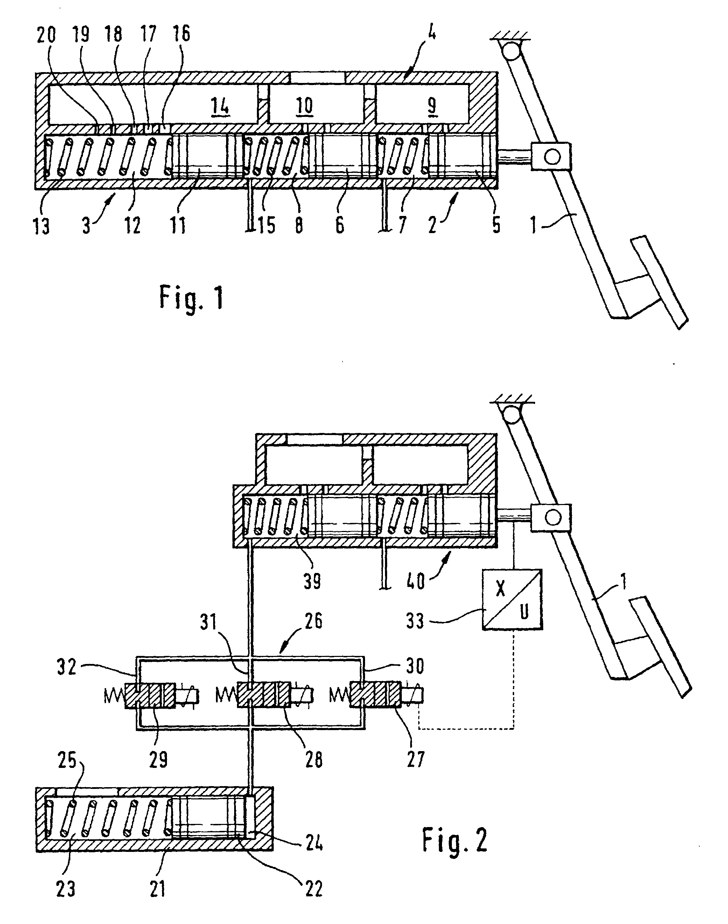

Die in Fig. 1 gezeigte erste Ausführung der erfindungsgemäßen Einrichtung zur Betätigung einer Kraftfahrzeug-Bremsanlage besteht im wesentlichen aus einem Betätigungspedal, vorzugsweise einem Bremspedal 1, einem dem Bremspedal 1 wirkungsmäßig nachgeschalteten Notbremsdruckgeber, vorzugsweise einem Hauptbremszylinder 2 in Tandemausführung, sowie einem mit dem Bremspedal 1 bzw. dem Tandemhauptzylinder 2 zusammenwirkenden Wegsimulator 3. Der Tandemhauptzylinder 2 weist bekannterweise zwei hintereinander angeordnete Kolben 5, 6 auf, die zwei Druckräume 7, 8 begrenzen, die mit Kammern 9, 10 eines dem Tandemhauptzylinder 2 zugeordneten drucklosen Druckmittelvorratsbehälters 4 in Verbindung stehen. Der dem Tandemhauptzylinder 2 wirkungsmäßig nachgeschaltete, vorzugsweise im Gehäuse des Tandemhauptzylinders 2 integrierte Wegsimulator 3 besteht aus einem Simulatorkolben 11 sowie einer den Simulatorkolben 11 vorspannenden Simulatorfeder 13. Der Simulatorkolben 11, an dem sich eine den zweiten (Sekundär-) Kolben 6 des Tandemhauptzylinders 2 vorspannende Druckfeder 15 abstützt, begrenzt einen hydraulischen Raum 12, der die Simulatorfeder 13 aufnimmt. Der hydraulische Raum 12 steht mit einer dritten Kammer 14 des Druckmittelvorratsbehälters 4 über Durchlässe bzw. Bohrungen 16, 17, 18, 19, 20 unterschiedlicher Durchmesser in Verbindung, die einen variablen Strömungswiderstand bilden. Die Anordnung der Bohrungen ist dabei vorzugsweise derart getroffen, daß die Bohrungen 16, 17 größeren Durchmessers kleinen Betätigungswegen, d.h. geringen Fahrzeugverzögerungen, zugeordnet sind, während die Bohrungen 19, 20 geringeren Durchmessers in einem Bereich ausgebildet sind, der durch Zürücklegen mittlerer bis langer Betätigungswege vom Simulatorkolben 11 erreichbar sind, so daß mittlere und hohe Fahrzeugverzögerungen relativ schnell eingesteuert werden können. Diese Maßnahmen erlauben dem Fahrer eine überschwingfreie schnelle Betätigung der erfindungsgemäßen Einrichtung auf einen gewünschten Wert.

Bei der in Fig. 2 gezeigten zweiten Ausführungsform des Erfindungsgegenstandes ist der Wegsimulator 3 getrennt vom Notbremsdruckgeber bzw. Tandemhauptzylinder 40 ausgebildet und besteht aus einem Zylinder 21, dessen Innenraum durch einen Simulatorkolben 22 in einen pneumatischen Raum 23 sowie einen hydraulischen Raum 24 unterteilt ist. Während der die Simulatorfeder 25 aufnehmende pneumatische Raum 23 in ständiger Verbindung mit der Atmosphäre steht, ist der hydraulische Raum 24 an den zweiten (Sekundär-) Druckraum 39 des Tandemhauptzylinders 40 angeschlossen. Die hydraulische Verbindung zwischen Raum 24 und Druckraum 39 erfolgt dabei vorzugsweise über eine Ventilanordnung 26, die im gezeigten Beispiel durch drei Ventileinrichtungen 27, 28, 29 gebildet ist. Die Ventileinrichtungen 27, 28, 29 sind durch elektromagnetisch betätigbare, vorzugsweise stromlos geschlossene (SG-) 2/2-Wegeventile gebildet, die in drei parallel zueinander geschalteten Leitungsabschnitten 30, 31, 32 eingefügt sind. Bei der Betätigung der erfindungsgemäßen Betätigungseinrichtung werden die 2/2-Wegeventile 27 - 29 durch Ausgangssignale eines den Betätigungsweg des Bremspedals 1 erfassenden Wegsensors bzw. Weg-Spannungswandlers 33 gleichzeitig angesteuert bzw. auf Durchlaß geschaltet und mit zunehmendem Betätigungsweg nacheinander geschlossen, so daß die vorhin erwähnte, betätigungswegabhängige Dämpfungswirkung erreicht wird.

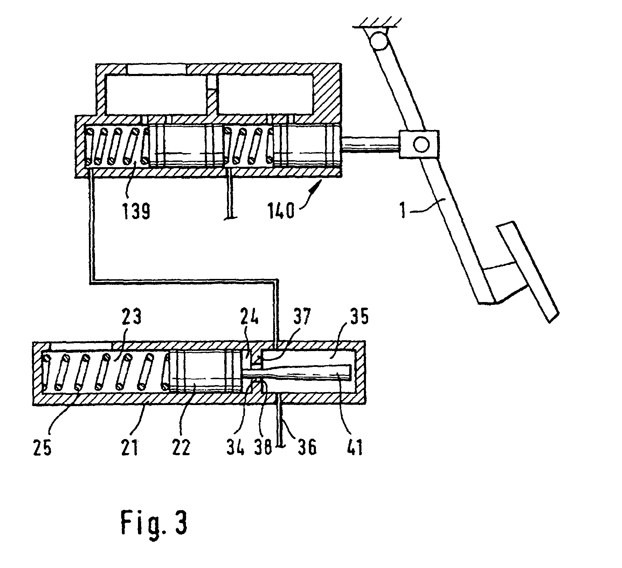

Bei der in Fig. 3 dargestellten Ausführungsvariante entspricht der Aufbau des Wegsimulators 3 weitgehend dem, der in zusammenhang mit Fig. 2 erläutert wurde. Der vorhin erwähnte hydraulische Raum 24 wirkt jedoch mit einer hydraulischen Kammer 35 zusammen, an die einerseits der zweite (Sekundär-) Druckraum 139 des Tandemhauptzylinders 140 und andererseits eine zu einer nicht gezeigten Radbremse des Fahrzeuges führende hydraulische Leitung 36 angeschlossen ist. Die Verbindung zwischen Raum 24 und Kammer 35 erfolgt dabei vorzugsweise mittels eines in einer dazwischen angeordneten Trennwand 37 ausgebildeten Durchlasses bzw. einer Öffnung 38, durch die ein mit dem Simulatorkolben 22 in kraftübertragender Verbindung stehendes Ventilelement 39 hindurchgeführt ist, das in seinem Durchtrittsbereich konisch ausgebildet ist. Durch eine translatorische Bewegung des Ventilelements 39 in der Zeichnung nach links wird der zwischen der Wand der Öffnung 38 und dem Ventilelement 39 begrenzte Ringspalt verkleinert, so daß der Durchflußquerschnitt der Öffnung 38 geändert wird und eine Blende 34 mit betätigungswegabhängig kontinuierlich veränderbarem Öffnungsgrad gebildet wird.

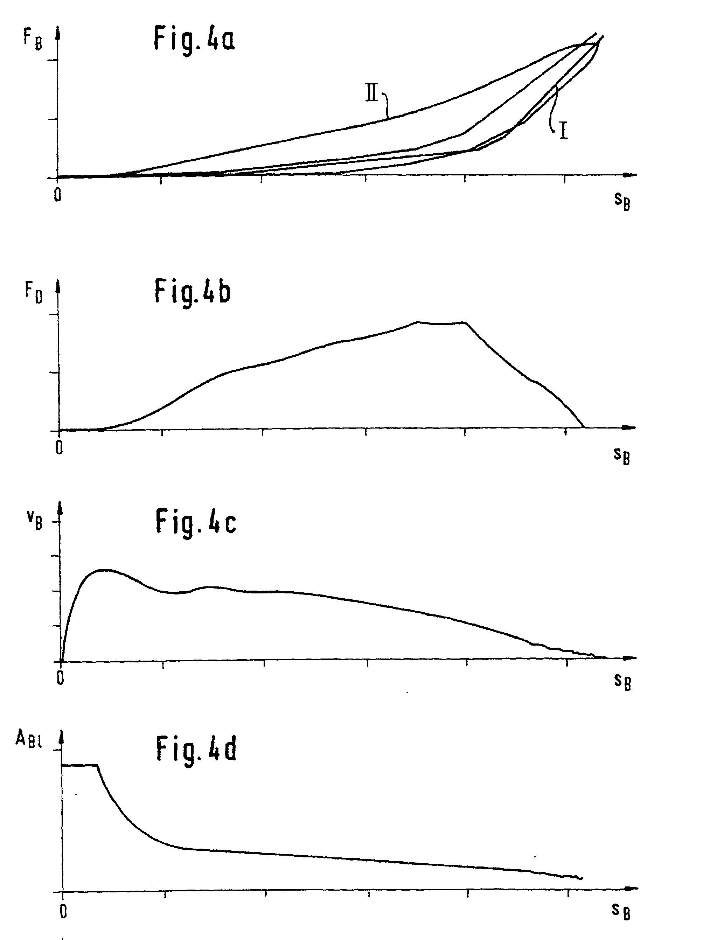

Die Funktionsweise der in Fig. 3 dargestellten Ausführung des Erfindungsgegenstandes erhellt aus den in Fig. 4a - d gezeigten diagrammatischen Darstellungen.

Die in Fig. 4a dargestellten Verläufe zeigen die Abhängigkeit der auf das Bremspedal 1 einwirkenden Betätigungskraft F_{B} vom Pedalbetätigungsweg s_{B}. Der mit I bezeichnete erste Verlauf zeigt ein quasistatisches Verhalten eines ungedämpften Systems, während der Verlauf II das dynamische Verhalten der erfindungsgemäßen Einrichtung nach Fig. 3 zeigt.

Fig. 4b zeigt die Abhängigkeit der durch die Wirkung der variablen Blende 34 aufgebrachten Dämpfungskraft F_{D} vom Pedalbetätigungsweg s_{B}, wobei der dargestellte Verlauf durch Subtraktion der Verläufe II - I gemäß Fig. 4a entstanden ist.

Fig. 4c zeigt die Abhängigkeit der Pedalbetätigungsgeschwindigkeit v_{B} vom Pedalbetätigungsweg s_{B}, während Fig. 4d schließlich die Abhängigkeit des Durchflußquerschnitts A_{Bl} der variablen Blende 34 vom Pedalbetätigungsweg s_{B} bzw. Veränderungen des Strömungswiderstandes über dem Pedalbetätigungsweg s_{B} darstellt.

## Patentansprüche

1. Einrichtung zur Betätigung einer Kraftfahrzeug-Bremsanlage vom Typ "Brake-by-wire", bestehend aus einem Betätigungspedal (1) sowie einem mit dem Betätigungspedal (1) zusammenwirkenden Wegsimulator (3), dessen Simulatorkolben (11,22) mit dem Betätigungspedal (1) in kraftübertragender Verbindung steht und mittels einer Feder (13,25) vorgespannt ist, und der Mittel (16 - 20, 27 - 29,38,39) zur Dämpfung der Bewegung des Simulatorkolbens (11,22) in Abhängigkeit vom Betätigungspedalweg aufweist, **dadurch gekennzeichnet, dass** der Simulatorkolben (11,22) einen hydraulischen Raum (12,24) begrenzt, der über mindestens einen variablen Strömungswiderstand (16,17,18,19,20,27,28,29,30,31,32,34) mit einem zweiten hydraulischen Raum (4 bzw. 14,39,35) verbunden ist.

2. Einrichtung nach Anspruch 1 **dadurch gekennzeichnet, daß** der hydraulische Raum (12) die Feder (13) aufnimmt.

3. Einrichtung nach Anspruch 1 oder 2 **dadurch gekennzeichnet, daß** der variable Strömungswiderstand durch Bohrungen (16,17,18,19,20) unterschiedlicher Durchmesser gebildet ist, die in Betätigungsrichtung des Simulatorkolbens (11) hintereinander angeordnet und von diesem überfahrbar sind.

4. Einrichtung nach Anspruch 1, 2 oder 3 **dadurch gekennzeichnet, daß** der Wegsimulator (3) in einem Gehäuse eines dem Betätigungspedal (1) wirkungsmäßig nachgeschalteten hydraulischen Notbremsdruckgebers (2) ausgebildet ist und daß der zweite hydraulische Raum durch einen dem Notbremsdruckgeber (2) zugeordneten Nachlaufbehälter (4) gebildet ist.

5. Einrichtung nach Anspruch 3 **dadurch gekennzeichnet, daß** der Notbremsdruckgeber (2) als ein mindestens einen Kolben (5,6) aufweisender hydraulischer Zylinder ausgebildet ist und daß der Simulatorkolben (11) der Abstützung einer den Kolben (6) vorspannenden Druckfeder (15) dient.

6. Einrichtung nach Anspruch 5 **dadurch gekennzeichnet, dass** der Notbremsdruckgeber (2) als ein Hauptbremszylinder in Tandemausführung ausgebildet ist und dass der Nachlaufbehälter (4) drei Kammern (9,10,14) aufweist, von denen zwei (9,10) den Hauptbremszylinder-Druckräumen (7,8) zugeordnet sind und die dritte (14) den zweiten hydraulischen Raum des Wegsimulators (3) bildet.

7. Einrichtung nach Anspruch 1 **dadurch gekennzeichnet, daß** der variable Strömungswiderstand durch mehrere parallelgeschaltete hydraulische Leitungen (30,31,32) gebildet ist, in denen Ventileinrichtungen (27,28,29) eingefügt sind.

8. Einrichtung nach Anspruch 7 **dadurch gekennzeichnet, daß** die Ventileinrichtungen (27,28,29) gleichzeitig ansteuerbar und in Abhängigkeit vom Betätigungsweg des Betätigungspedals (1) nacheinander abschaltbar sind.

9. Einrichtung nach Anspruch 7 oder 8 **dadurch gekennzeichnet, daß** die Ventileinrichtungen (27,28,29) durch elektromagnetisch betätigbare 2/2-Wegeventile gebildet sind, die durch Ausgangssignale eines den Betätigungsweg des Betätigungspedals (1) erfassenden Wegsensors (33) ansteuerbar sind.

10. Einrichtung nach Anspruch 9 **dadurch gekennzeichnet, daß** die 2/2-Wegeventile (27,28,29) als stromlos geschlossene (SG-) Ventile ausgebildet sind.

11. Einrichtung nach Anspruch 1 oder einem der Ansprüche 7 bis 10 **dadurch gekennzeichnet, dass** der zweite hydraulische Raum durch einen Druckraum (39) eines dem Betätigungspedal (1) wirkungsmäßig nachgeschalteten hydraulischen Notbremsdruckgebers (40) gebildet ist.

12. Einrichtung nach Anspruch 1 **dadurch gekennzeichnet, daß** der zweite hydraulische Raum durch eine im Gehäuse (21) des Wegsimulators (3) ausgebildete Kammer (35) gebildet ist, die einerseits mit einem Druckraum (139) eines dem Betätigungspedal (1) wirkungsmäßig nachgeschalteten hydraulischen Notbremsdruckgebers (140) und andererseits mit mindestens einer Radbremse des Fahrzeugs verbunden ist, wobei der variable Strömungswiderstand durch eine zwischen den beiden Räumen (24,35) angeordnete Blende (34) gebildet ist, deren Öffnungsgrad abhängig vom Bewegungsweg des Simulatorkolbens (22) veränderbar ist.

13. Einrichtung nach Anspruch 12 **dadurch gekennzeichnet, daß** die Blende (34) durch eine in einer die beiden Räume (24,35) voneinander trennenden Wand (37) vorgesehene Öffnung (38) gebildet ist, deren Durchflußquerschnitt mittels eines durch den Simulatorkolben (22) betätigbaren Ventilelements (41) veränderbar ist.

14. Einrichtung nach einem der vorhergehenden Ansprüche 7 bis 13 **dadurch gekennzeichnet, daß** der Simulatorkolben (22) einen pneumatischen Raum (23) begrenzt, der die Feder (25) aufnimmt und mit der Atmosphäre in Verbindung steht.

## Claims

1. Arrangement for actuating an automotive vehicle brake system of the type 'brake-by-wire', comprised of an actuating pedal (1) and a travel simulator (3) which cooperates with the actuating pedal (1) and whose simulator piston (11, 22) is in a force-transmitting connection with the actuating pedal (1) and is preloaded by means of a spring (13, 25), and which includes means (16-20, 27-29, 38, 39) of attenuating the movement of the simulator piston (11, 22) as a function of the actuating pedal travel,
**characterized in that** the simulator piston (11,22) delimits a hydraulic chamber (12,24) which is connected to a second hydraulic chamber (4, or 14,39,35) by way of at least one variable flow resistance (16,17,18,19,20,27,28,29,30,31,32,34).

2. Arrangement as claimed in claim 1,
**characterized in that** the hydraulic chamber (12) accommodates the spring (13).

3. Arrangement as claimed in claim 1 or claim 2,
**characterized in that** the variable flow resistance is provided by bores (16,17,18,19,20) of varying diameters which are serially arranged in the actuating direction of the simulator piston (11) and can be overridden by it.

4. Arrangement as claimed in claim 1, 2 or 3,
**characterized in that** the travel simulator (3) is incorporated in a housing of a hydraulic emergency braking pressure generator (2) which is connected downstream of the actuating pedal (1) in terms of effect, and **in that** the second hydraulic chamber is provided by a supply reservoir (4) associated with the emergency braking pressure generator (2).

5. Arrangement as claimed in claim 3,
**characterized in that** the emergency braking pressure generator (2) is configured as a hydraulic cylinder which has at least one piston (5,6), and **in that** the simulator piston (11) is used for the support of a compression spring (15) biasing the piston (6).

6. Arrangement as claimed in claim 5,
**characterized in that** the emergency braking pressure generator (2) is configured as a master brake cylinder in tandem design, and **in that** the supply reservoir (4) includes three chambers (9,10,14), two (9, 10) of them being associated with the master brake cylinder pressure chambers (7,8) while the third one (14) forms the second hydraulic chamber of the travel simulator (3).

7. Arrangement as claimed in claim 1,
**characterized in that** the variable flow resistance is provided by several parallel-connected hydraulic lines (30,31,32), in which valve devices (27,28,29) are inserted.

8. Arrangement as claimed in claim 7,
**characterized in that** the valve devices (27,28,29) can be actuated simultaneously and deactivated one after the other as a function of the actuating travel of the actuating pedal (1).

9. Arrangement as claimed in claim 7 or claim 8,
**characterized in that** the valve devices (27,28,29) are provided by electromagnetically operable two-way/two-position directional control valves which can be actuated by output signals of a travel sensor (33) which senses the actuating travel of the actuating pedal (1).

10. Arrangement as claimed in claim 9,
**characterized in that** the two-way/two-position directional control valves (27,28,29) are configured as normally closed (NC) valves.

11. Arrangement as claimed in claim 1 or any one of claims 7 to 10,
**characterized in that** the second hydraulic chamber is a pressure chamber (39) of a hydraulic emergency braking pressure generator (40) which is connected downstream of the actuating pedal (1) in terms of effect.

12. Arrangement as claimed in claim 1,
**characterized in that** the second hydraulic chamber is a chamber (35) arranged in the housing (21) of the travel simulator (3), the said chamber (35) being connected to a pressure chamber (139) of a hydraulic emergency braking pressure generator (140) that is connected downstream of the actuating pedal (1) in terms of effect, on the one hand, and to at least one wheel brake of the vehicle, on the other hand, and the variable flow resistance is provided by a diaphragm (34) interposed between the two chambers (24,35), and the diaphragm's extent of opening is variable as a function of the actuating travel of the simulator piston (22).

13. Arrangement as claimed in claim 12,
**characterized in that** the diaphragm (34) is provided by an opening (38) in a wall (37) which separates the two chambers (24,35) from each other, and the flow cross-section of opening (38) is variable by way of a valve element (41) that is operable by the simulator piston (22).

14. Arrangement as claimed in any one of the preceding claims 7 to 13,
**characterized in that** the simulator piston (22) delimits a pneumatic chamber (23) which accommodates the spring (25) and is connected to the atmosphere.

## Revendications

1. Dispositif d'actionnement d'une installation de freinage de véhicule automobile du type "frein par fil", constitué d'une pédale d'actionnement (1) et d'un simulateur de course (3) qui coopère avec la pédale d'actionnement (1), dont le piston de simulateur (11, 22) est en liaison de transmission de force avec la pédale d'actionnement (1) et est soumis à une précontrainte au moyen d'un ressort (13, 25) et qui comporte des moyens (16 - 20, 27 - 29, 38, 39) servant à amortir le mouvement du piston de simulateur (11, 22) en fonction de la course de pédale d'actionnement, **caractérisé en ce que** le piston de simulateur (11, 22) délimite un espace hydraulique (12, 24) qui est reliée à un second espace hydraulique (4 ou 14, 39, 35) par l'intermédiaire d'au moins une résistance variable à l'écoulement (16, 17, 18, 19, 20, 27, 28, 29, 30, 31, 32, 34).

2. Dispositif suivant la revendication 1, **caractérisé en ce que** l'espace hydraulique (12) sert à loger le ressort (13).

3. Dispositif suivant la revendication 1 ou 2, **caractérisé en ce que** la résistance variable à l'écoulement est formée au moyen de perçages (16, 17, 18, 19, 20) de diamètres différents qui sont disposés l'un derrière l'autre suivant la direction d'actionnement du piston de simulateur (11) et devant lesquels celui-ci peut passer.

4. Dispositif suivant la revendication 1, 2 ou 3, **caractérisé en ce que** le simulateur de course (3) est réalisé dans un boîtier d'un générateur de pression de freinage d'urgence (2) hydraulique monté sur le plan de l'action en aval de la pédale d'actionnement (1) et **en ce que** le second espace hydraulique est formé par un réservoir d'égalisation (4) associé au générateur de pression de freinage d'urgence (2).

5. Dispositif suivant la revendication 3, **caractérisé en ce que** le générateur de pression de freinage d'urgence (2) est réalisé sous forme d'un cylindre hydraulique comportant au moins un piston (5, 6) et **en ce que** le piston de simulateur (11) sert à l'appui d'un ressort de compression (15) soumettant à une précontrainte le piston (6).

6. Dispositif suivant la revendication 5, **caractérisé en ce que** le générateur de pression de freinage d'urgence (2) est réalisé sous forme d'un maître-cylindre de frein à réalisation tandem et **en ce que** le réservoir d'égalisation (4) comporte trois chambres (9, 10, 14) dont deux (9, 10) sont associées aux espaces de pression de maître-cylindre de frein (7, 8) et la troisième (14) forme le second espace hydraulique du simulateur de course (3).

7. Dispositif suivant la revendication 1, **caractérisé en ce que** la résistance variable à l'écoulement est formée au moyen de plusieurs conduites hydrauliques (30, 31, 32) connectées en parallèle dans lesquelles des dispositifs de valve (27, 28, 29) sont insérés.

8. Dispositif suivant la revendication 7, **caractérisé en ce que** les dispositifs de valve (27, 28, 29) peuvent être commandés simultanément et peuvent faire l'objet d'une coupure l'un après l'autre en fonction de la course d'actionnement de la pédale d'actionnement (1).

9. Dispositif suivant la revendication 7 ou 8, **caractérisé en ce que** les dispositifs de valve (27, 28, 29) sont formés par des valves à 2 voies/2 positions à actionnement électromagnétique qui peuvent être commandées par des signaux de sortie d'un capteur de course (33) détectant la course d'actionnement de la pédale d'actionnement (1).

10. Dispositif suivant la revendication 9, **caractérisé en ce que** les valves à 2 voies/2 positions (27, 28, 29) sont réalisées sous forme de valves fermées en l'absence de courant (FAC).

11. Dispositif suivant la revendication 1 ou l'une des revendications 7 à 10, **caractérisé en ce que** le second espace hydraulique est formé par un espace de pression (39) d'un générateur de pression de freinage d'urgence (40) hydraulique connecté en ce qui concerne l'action en aval de la pédale d'actionnement (1).

12. Dispositif suivant la revendication 1, **caractérisé en ce que** le second espace hydraulique est formé par une chambre (35) qui est réalisée dans le boîtier (21) du simulateur de course (3) et qui est reliée d'une part à un espace de pression (139) d'un générateur de pression de freinage d'urgence (140) hydraulique connecté sur le plan de l'action en aval de la pédale d'actionnement (1) et d'autre part à au moins un frein de roue du véhicule, la résistance variable à l'écoulement étant formée par un étranglement disposé entre les deux espaces (24, 35) dont le degré d'ouverture peut être modifié en fonction de la course de déplacement du piston de simulateur (22).

13. Dispositif suivant la revendication 12, **caractérisé en ce que** l'étranglement (34) est formé au moyen d'une ouverture (38) qui est prévue dans une paroi (37) séparant l'un de l'autre les deux espaces (24, 35) et dont la section transversale de passage peut être modifiée au moyen d'un élément de valve (41) pouvant être actionné au moyen du piston de simulateur (22).

14. Dispositif suivant l'une des revendications précédentes 7 à 13, **caractérisé en ce que** le piston de simulateur (22) délimite un espace pneumatique (23) qui sert à loger le ressort (25) et communique avec l'atmosphère.
